(19) Europäisches Patentamt European Patent Office Office européen des brevets

(11) **EP 3 445 000 B1**

(12) **EUROPEAN PATENT SPECIFICATION**

(45) Date of publication and mention of the grant of the patent:
**28.10.2020 Bulletin 2020/44**

(21) Application number: **17781800.2**

(22) Date of filing: **29.03.2017**

(51) Int Cl.:
***H04L 12/24*** *(2006.01)*

(86) International application number:
**PCT/CN2017/078573**

(87) International publication number:
**WO 2017/177824 (19.10.2017 Gazette 2017/42)**

(54) **LINK DECISION METHOD AND DECISION DEVICE**

VERKNÜPFUNGSENTSCHEIDUNGSVERFAHREN UND ENTSCHEIDUNGSVORRICHTUNG

PROCÉDÉ ET DISPOSITIF DE DÉCISION DE LIAISON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2016 CN 201610225404**

(43) Date of publication of application:
**20.02.2019 Bulletin 2019/08**

(73) Proprietor: **Tencent Technology (Shenzhen) Company Limited**
**Shenzhen, Guangdong 518057 (CN)**

(72) Inventors:
- XUE, Zheng
  Shenzhen
  Guangdong 518057 (CN)
- ZHOU, Yu
  Shenzhen
  Guangdong 518057 (CN)
- LV, Jing
  Shenzhen
  Guangdong 518057 (CN)
- ZHAO, Yanbai
  Shenzhen
  Guangdong 518057 (CN)
- WANG, Baojian
  Shenzhen
  Guangdong 518057 (CN)
- QIAO, Ningbo
  Shenzhen
  Guangdong 518057 (CN)

(74) Representative: **Witte, Weller & Partner Patentanwälte mbB**
**Postfach 10 54 62**
**70047 Stuttgart (DE)**

(56) References cited:
CN-A- 102 438 018    CN-A- 102 594 703
CN-A- 103 718 532    CN-A- 104 160 687
CN-A- 105 897 478    US-A1- 2013 235 731

- QUANG DUC BUI ET AL: "Relay Path Selection Approaches in Peer-to-Peer VoIP Systems", TELECOMMUNICATION NETWORKS AND APPLICATIONS CONFERENCE, 2008. ATNAC 2008. AUSTRALASIAN, IEEE, PISCATAWAY, NJ, USA, 7 December 2008 (2008-12-07), pages 361-366, XP031424758, ISBN: 978-1-4244-2602-7
- HUI WANG ET AL: "MBRS: A Meridian-Based Relay Selection algorithm for P2P VoIP", BROADBAND NETWORK AND MULTIMEDIA TECHNOLOGY (IC-BNMT), 2010 3RD IEEE INTERNATIONAL CONFERENCE ON, IEEE, 26 October 2010 (2010-10-26), pages 965-969, XP031977712, DOI: 10.1109/ICBNMT.2010.5705232 ISBN: 978-1-4244-6769-3

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to Chinese Patent Application No. 201610225404.X, filed with the State Intellectual Property Office of People's Republic of China on April 12, 2016, and entitled "LINK DECISION METHOD AND DECISION DEVIC".

**FIELD OF THE TECHNOLOGY**

The disclosure relates to the field of communication technologies, and more particularly, to a link decision-making method and a decision-making device.

**BACKGROUND OF THE DISCLOSURE**

Voice over Internet Protocol (VoIP) has two transmission manners: direct connection and transit.

The direct connection is that a user equipment performs point to point (P2P) data transmission with another user equipment. The advantage of the direct connection manner is simplicity and high efficiency, and the disadvantage of the direct connection manner is low stability and controllability. In the transit manner, a transit server is additionally provided between two user equipments that are in a call, and a data stream is transmitted to a peer end by using the transit server. The advantage of the transit manner is high stability and controllability, and the disadvantage of the transit manner is a need for support by a server resource and a bandwidth resource.

In view of the above, the two transmission manners: direct connection and transit each have advantages and disadvantages. Therefore, stability and reliability of VoIP links cannot be ensured if either transmission manner is directly used.

US2013/0235731 discloses identifying and transitioning to an improved VOIP session. An additional session is established for voice over internet protocol communication between a pair of endpoints in a network, wherein a current session is already established between the endpoints and is currently used for data packet communication between endpoints. Qualities of each of the sessions for voice over internet protocol communication are assessed and compared, and the endpoints signaled to select the session having the higher assessed quality as a current session for further data packet communication between the endpoints, and to remove the lower quality session from use as a session for the further data packet communication between the endpoints, or to use the lower quality session as a secondary session for data communication between the endpoints. More particularly, the assessed qualities of each of the current and additional sessions meet a basic requirement defined to provide voice over internet protocol data packet communication between the endpoints.

Quang Duc Bui; Jennings A, "Relay Path Selection Approaches in Peer-to-Peer VoIP Systems", Telecommunication Networks and Applications Conference, 2008, PD 2008-12-07, discusses and compares the performances of two relay path selection approaches proposed for VoIP overlay systems through extensive simulations.

**SUMMARY**

A link decision-making method is provided according to an embodiment of the present disclosure. With the link decision-making method, the link quality can be assessed according to the quality of service of audio data, and then a link on which VoIP is to be performed with high quality of service is determined. A corresponding decision-making device is further provided according to an embodiment of the present disclosure.

In a first aspect of the present disclosure, a link decision-method is provided. The method is applied to a link decision-making system, which includes a first user equipment and a second user equipment that are in a Voice over Internet Protocol VoIP call status, a transit server, and a decision-making device. The first user equipment is directly connected with the second user equipment through a first link including no node other than the first user equipment and the second user equipment, and the first user equipment is also connected with the second user equipment through a second link including the transit server existing between the first user equipment and the second user equipment. The method includes:

receiving, by the decision-making device, audio service quality data reported by the first user equipment, the audio service quality data being determined by the second user equipment according to audio data sent by the first user equipment and being fed back to the first user equipment;

determining, by the decision-making device according to the audio service quality data, a link quality score of a current sending link of the first user equipment, the current sending link being the first link or the second link; and

making, by the decision-making device according to the link quality score of the current sending link, a decision about using the first link or the second link as a subsequent sending link of the first user equipment.

The method further includes:

in a case that the subsequent sending link is the same as the current sending link, and a duration for which the current sending link is used exceeds N decision-making periods, determining, by the decision-making device according to the following equation, a time interval to a next request for link decision-making, wherein N is an integer greater than 1,

$$\text{Period} = \text{Period}_0 + N * \Delta,$$

where $Period_0$ is an initial time interval, and $\Delta$ is a link stability coefficient; and

sending, by the decision-making device, the time interval *Period* to the first user equipment.

In a second aspect of the present disclosure, a decision-making device is provided. The decision-making device is applied to a link decision-making system, which further includes a first user equipment and a second user equipment that are in a Voice over Internet Protocol VoIP call status and a transit server. The first user equipment is directly connected with the second user equipment through a first link including no node other than the first user equipment and the second user equipment, and the first user equipment is also connected with the second user equipment through a second link including the transit server existing between the first user equipment and the second user equipment. The decision-making device includes a receiving unit, a determining unit, and a decision-making unit.

The receiving unit is configured to receive audio service quality data reported by the first user equipment. The audio service quality data is determined by the second user equipment according to audio data sent by the first user equipment and is fed back to the first user equipment;

The determining unit is configured to determine, according to the audio service quality data received by the receiving unit, a link quality score of a current sending link of the first user equipment. The current sending link is the first link or the second link; and

The decision-making unit is configured to make, according to the link quality score of the current sending link which is determined by the determining unit, a decision about using the first link or the second link as a subsequent sending link of the first user equipment.

The determining unit is further configured to: in a case that the subsequent sending link is the same as the current sending link, and a duration for which the current sending link is used exceeds N decision-making periods, determine, according to the following equation, a time interval to a next request for link decision-making, where N is an integer greater than 1,

$$\text{Period} = \text{Period}_0 + N * \Delta,$$

where $Period_0$ is an initial time interval, and $\Delta$ is a link stability coefficient. The decision-making device further includes: a sending unit configured to send the time interval *Period* determined by the determining unit to the first user equipment.

In a third aspect of the present disclosure, a link decision-making system is provided. The link decision-making system includes: a first user equipment and a second user equipment that are in a Voice over Internet Protocol (VoIP) call status, a transit server, and a decision-making device. The first user equipment is directly connected with the second user equipment through a first link including no node other than the first user equipment and the second user equipment, and the first user equipment is also connected with the second user equipment through a second link including the transit server existing between the first user equipment and the second user equipment.

The decision-making device is the decision-making device according to the second aspect.

In the conventional technology, a VoIP call is made by using either a link for direct connection or a link for transit, the two links each having disadvantages. In contrast, with the link decision-making method provided in the present disclosure, a decision about selecting the first link or the second link as the subsequent sending link may be made according to the link quality of the current sending link of the first user equipment, so as to ensure that a better link for transmitting a data stream of the VoIP is selected, thereby improving the quality of service of the VoIP.

## BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show only some embodiments of the present disclosure, and a person skilled in the art may still derive other drawings from these accompanying drawings without creative efforts.

FIG. 1 is a schematic diagram of a link decision-making system according to an embodiment of the present disclosure;

FIG. 2 is a schematic diagram of a link decision-making method according to an embodiment of the present disclosure;

FIG. 3A is a schematic diagram of a queue of historical link information according to an embodiment of the present disclosure;

FIG. 3B is a schematic diagram of a queue of historical link information according to an embodiment of the present disclosure;

FIG. 4 is a schematic diagram of a queue of historical link information according to an embodiment of the present disclosure;

FIG. 5 is a schematic diagram of a link decision-making process of a decision-making device in a decision-making system according to an embodiment of the present disclosure;

FIG. 6 is a schematic diagram a decision-making device according to an embodiment of the present disclosure;

FIG. 7 is a schematic diagram of a decision-making device according to another embodiment of the present disclosure;

FIG. 8 is a schematic diagram of a decision-making device according to another embodiment of the present disclosure; and

FIG. 9 is a schematic diagram of a decision-making device according to another embodiment of the present disclosure.

## DESCRIPTION OF EMBODIMENTS

A link decision-making method is provided according to an embodiment of the present disclosure. With the link decision-making method, the link quality can be assessed according to the quality of service of audio data, and then a link on which VoIP can be performed with high quality of service is determined. A corresponding decision-making device is further provided according to an embodiment of the present disclosure. Detailed descriptions are separately provided below.

The following clearly and completely describes the technical solutions in the embodiments of the present disclosure with reference to the accompanying drawings in the embodiments of the present disclosure. Apparently, the described embodiments are some embodiments of the present disclosure rather than all of the embodiments. All other embodiments obtained by a person skilled in the art based on the embodiments of the present disclosure without creative efforts shall fall within the protection scope of the present disclosure.

Voice over Internet Protocol (VoIP) is to digitalize an analog signal (voice) to form data packets and transmit the data packets on an IP network in a real-time manner. Internet phone and voice services of instant messaging are examples of VoIP services.

The VoIP has two transmission manners: direct connection and transit. The direct connection is that a user equipment performs point to point (P2P) data transmission with another user equipment. In the transit manner, a transit server is additionally provided between two user equipments that are in a call, and a data stream is transmitted to a peer end by using the transit server. A link for direct connection and a link for transit each have advantages and disadvantages. Therefore, to better ensure the quality of service (QoS) in a transmission process of an audio stream, the following solution is provided according to the present disclosure: making, according to the quality of service of transmitting the audio through a current sending link, a decision whether a link for direct connection or a link for transit is to be selected as a subsequent sending link, so as to ensure that a better link for transmitting a data stream of the VoIP is selected, thereby improving the service of quality of the VoIP.

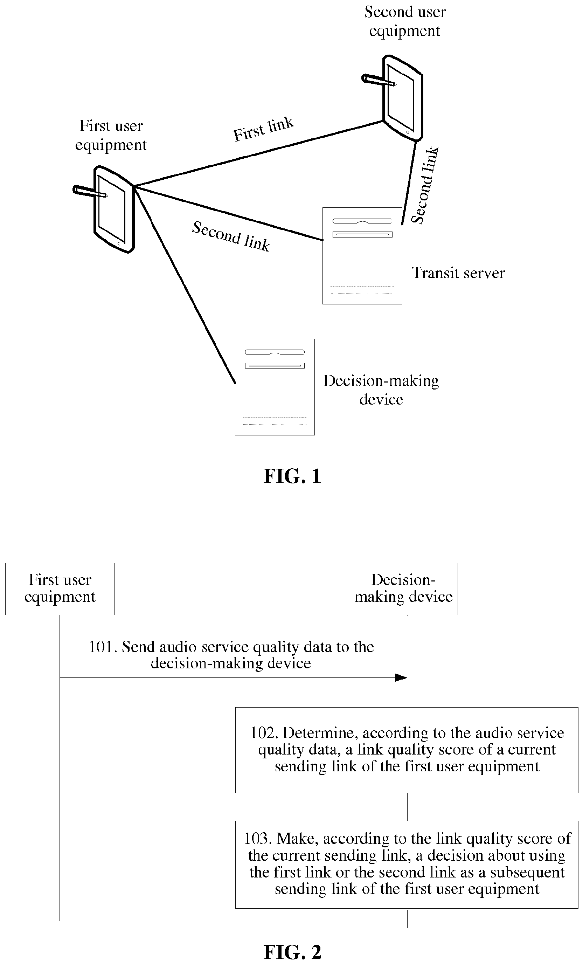

In the present disclosure, "first" and "second" in a first user equipment and a second user equipment have no specific reference, and refer to two user equipments that in a VoIP call with each other. The two user equipments both have the capability of reporting audio service quality data in the present disclosure. A link decision-making process in the present disclosure is introduced below with reference to FIG. 1.

FIG. 1 is a schematic diagram of a link decision-making system according to an embodiment of the present disclosure.

As shown in FIG. 1, the link decision-making system in this embodiment of the present disclosure includes a first user equipment and a second user equipment that are in a VoIP call status, a transit server, and a decision-making device. A first link directly connecting the first user equipment to the second user equipment and a second link that transits by using the transit server exist between the first user equipment and the second user equipment. When the first user equipment and the second user equipment are in the VoIP call status, no matter whether the first user equipment sends audio data to the second user equipment by using the first link or the second link, the second user equipment determines, according to the received audio data, audio service quality data of a current sending link used by the first user equipment, and then the second user equipment feeds back the determined audio service quality data to the first user equipment.

The second user equipment sends the audio service quality data to the first user equipment by using a decision-making information data packet. The decision-making information data packet is generally a Real-time Transport Control Protocol (RTCP) packet.

Reference may be made to FIG. 2 for understanding of the link decision-making procedure involved after the first user equipment receives the decision-making information data packet.

FIG. 2 is a schematic diagram of a link decision-making method according to an embodiment of the present disclosure. The link decision-making method includes the following steps 101 to 103.

In step 101, a first user equipment sends audio service quality data to a decision-making device. The audio service quality data is determined by a second user equipment according to audio data sent by the first user equipment and is fed back to the first user equipment.

On reception of a decision-making information data packet, the first user equipment samples data in the decision-making information data packet. The amount of data sampled by the first user equipment may be pre-notified by a decision-making server. For example, data is collected at 15 sampling points, and the same audio service quality parameters are collected at each of the sampling points. The audio service quality parameters collected at each sampling point may include but is not limited to: a network packet loss $e_{network}$, a playout packet loss $e_{playout}$, a coding delay $d_{codec}$, a playout delay $d_{playout}$, and a network delay $d_{network}$.

The audio service quality data sent by the first user equipment to the decision-making device may be the audio service quality parameter corresponding to each sampling point. For example, as stated above, data is collected at 15 sampling points, and then the audio service quality data reported to the decision-making device is the network packet loss $e_{network}$, the playout packet loss $e_{playout}$, the coding delay $d_{codec}$, the playout delay $d_{playout}$, and the network delay $d_{network}$ corresponding to each of the 15 sampling points.

In step 102, the decision-making device determines a link quality score of a current sending link of the first user equipment according to the audio service quality data. The current sending link is a first link or a second link.

Optionally, in step 102, the decision-making device cleans the audio service quality data, determines audio service quality data of an effective sampling point in the audio service quality data, and determines the link quality score of the current sending link of the first user equipment according to an audio service quality parameter of the effective sampling point and a correspondence between the link quality score and the audio service quality parameter.

On reception of the service quality parameters of the sampling points sent by the first user equipment, the decision-making device needs to clean service quality parameters of abnormal sampling points, since these sampling points may be repetitive, or service quality parameters of these sampling points may excessively deviate due to a network jitter. Service quality parameters of the remaining sampling points after cleaning are service quality parameters of effective sampling points.

The audio service quality parameters of each sampling point includes the network packet loss $e_{network}$, the playout packet loss $e_{playout}$, the coding delay $d_{codec}$, the playout delay $d_{playout}$, and the network delay $d_{network}$. The decision-making device may calculate average values of network packet losses $e_{network}$, playout packet losses $e_{playout}$, coding delays $d_{codec}$, playout delays $d_{playout}$, and network delays $d_{network}$ of all the effective sampling points by using the parameters. Then the decision-making device determines the link quality score of the current sending link of the first user equipment according to a correspondence between the link quality score and the audio service quality parameters, which is expressed by the following equation:

$$F = 94.2 - (\gamma_1 + \gamma_2 \ln(1 + \gamma_3 e)) - (0.024d + 0.11(d - 177.3)H(d - 177.3),$$

where $d = d_{codec} + d_{playout} + d_{network}$ , and $e = e_{network} + (1 - e_{network})e_{playout}$. In addition, $d_{codec}$, $d_{playout}$, $d_{network}$, $e_{network}$, and $e_{playout}$ involved in the formula are all average values of the effective sampling points. In addition, $(\gamma_1, \gamma_2, \gamma_3)$ is a group of parameters related to an encoder, and H(x) is defined as: (x<0)?0:1. That is, when d-177.3 is greater than 0, H(d-177.3) is 1, and when d-177.3 is less than 0, H(d-177.3) is 0.

The calculated result F is the link quality score of the current sending link.

In step 103, the decision-making device makes a decision about using the first link or the second link as a subsequent sending link of the first user equipment according to the link quality score of the current sending link.

Optionally, in step 103, the decision-making device determines a decision-making model according to stored historical link information, and determines the first link or the second link as the subsequent sending link of the first user equipment according to the link quality score of the current sending link and the decision-making model.

Given that frequent link handovers may make audio signals unstable, in a link decision-making process, not only the link quality score of the current link is used a basis, but also stored historical link information needs to be considered.

In the present disclosure, the historical link information is stored in a queue. A maximum length L is set for the queue, and old information is deleted from the queue if the maximum length is exceeded. In this way, not only the need for searching for the historical link information is met, but also it can be ensured that the queue is not excessively long, so that stored resources are not wasted.

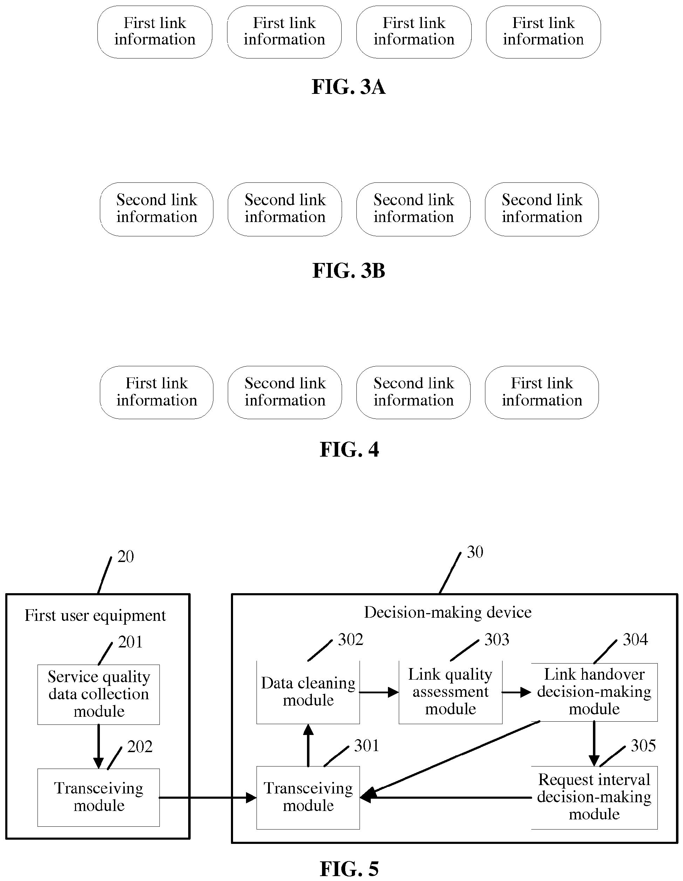

The decision-making model in the present disclosure is determined according to the type of a historical link stored in the queue. There are two manners of storing historical link information in the queue. One manner is to include only one type of historical link information, as shown in FIG. 3A and 3B. FIG. 3A shows that only first link information is included, and FIG. 3B shows that only second link information is included. The other manner is to include two types of link information, as shown in FIG. 4, where not only the first link information, but also the second link information is included.

Optionally, for cases shown in FIG. 3A and FIG. 3B, the determining, by the decision-making device, the decision-making model according to the stored historical link information may include:

in a case that the historical link information includes only information about one type of link, determining the decision-making model as an absolute threshold decision-making model, where the one type of link is the first link or the second link, and the absolute threshold decision-making model is expressed by the following equation:

$$Threshold_{abs} = Threshold_{abs0} - X^n,$$

where $Threshold_{abs}$ is a current absolute threshold, $Threshold_{abs\,0}$ is an initial absolute threshold, X is an attenuation parameter, and n is a total number of times of link handover up to the current time instant; and

the determining, by the decision-making device according to the link quality score of the current sending link and the decision-making model, the first link or the second link as the subsequent sending link of the first user equipment may include:

in a case of determining that the link quality score of the current sending link is less than the current absolute threshold $Threshold_{abs}$ , making, by the decision-making device, a decision about using another link as the subsequent sending link of the first user equipment, where the another link is the second link or the first link.

Optionally, for the case shown in FIG. 4, the determining, by the decision-making device, the decision-making model according to the stored historical link information may include:

in a case that the historical link information includes information about two types of links, determining the decision-making model as a relative threshold decision-making model, which is expressed by the following equation:

$$Threshold_{rel} = Threshold_{rel0} - X^n,$$

where $Threshold_{rel}$ is a current relative threshold, $Threshold_{rel0}$ is an initial relative threshold, X is an attenuation parameter, and n is a total number of times of link handover up to the present time instant; and

the determining, by the decision-making device according to the link quality score of the current sending link and the decision-making model, the first link or the second link as the subsequent sending link of the first user equipment includes:

in a case of determining that a difference between the link quality score of the current sending link and a quality score of another link is less than the current relative threshold $Threshold_{Ter}$, making, by the decision-making device, a decision about using the another link as the subsequent sending link of the first user equipment, where if the current sending link is the first link, the another link is the second link, and if the current sending link is the second link, the another link is the first link.

Exponential attenuation is performed on a handover threshold, so that the handover frequency and the number of times of handover can be effectively controlled to protect the stability of a VoIP session link.

In addition, optionally, the decision-making device sends a link handover instruction to the first user equipment, where

the link handover instruction is used to instruct:

the first user equipment to hand over from the first link to the second link if the current sending link is the first link, and the subsequent sending link is the second link; and
the first user equipment to hand over from the second link to the first link if the current sending link is the second link, and the subsequent sending link is the first link.

In a link handover decision-making logic of the present disclosure, for cases of handing over from transit to direct connection and handing over from direct connection to transit, the bias for link selection may be controlled by setting different initial thresholds and attenuation parameters, so that the system can perform selection according to a tradeoff between overall link performance and overall bandwidth overhead of the server. If a link for direct connection needs to be used as frequently as possible, the initial thresholds and the attenuation parameters may be set such that the selection is biased to the link for direct connection. If a link for transit needs to be used as frequently as possible, the initial thresholds and the attenuation parameters may be set such that the selection is biased to the link for transit. The initial thresholds and the attenuation parameters are set by a developer in an initial status.

Optionally, to alleviate request processing load of the decision-making device, the present disclosure further includes:

in a case that the subsequent sending link is the same as the current sending link, and a duration for which the current sending link is used exceeds N decision-making periods, determining, by the decision-making device according to the following equation, a time interval to a next request for link decision-making, where N is an integer greater than 1,

$$\text{Period} = \text{Period}_0 + \text{N} * \Delta,$$

where *Period*$_0$ is an initial time interval, and $\Delta$ is a link stability coefficient; and

sending, by the decision-making device, the time interval *Period* to the first user equipment.

A greater N indicates a more stable current link, that is, a lower handover need in a short period. Then, it is practical to appropriately increase the time interval to a next double-link request. This dynamic request design can greatly reduce the overall load of the decision-making device with little impact on time and efficiency of handover.

Information about using the first link or the second link as the subsequent sending link of the first user equipment is delivered, and a time interval to a next link assessment is delivered to the first user equipment.

In the conventional technology, a VoIP call is made by using either a link for direct connection or a link for transit, the two links each having disadvantages. In contrast, with the link decision-making method provided in the present disclosure, a decision about selecting the first link or the second link as the subsequent sending link may be made according to the link quality of the current sending link of the first user equipment, so as to ensure that a better link for transmitting a data stream of the VoTP is selected, thereby improving the Service of Quality of the VoIP.

The foregoing is described from the perspective of interaction between the first user equipment and the decision-making device. In the following, functions the decision-making device is subdivided. The decision-making device may include modules shown in FIG. 5.

FIG. 5 is a schematic diagram of a link decision-making process of a decision-making device in a decision-making system according to an embodiment of the present disclosure.

The link decision-making system shown in FIG. 5 includes a first user equipment 20 and a decision-making device 30. The first user equipment includes a service quality data collection module 201 and a transceiving module 202. The decision-making device includes a transceiving module 301, a data cleaning module 302, a link quality assessment module 303, a link handover decision-making module 304, and a request interval decision-making module 305.

The data collection module 201 collects, from an RTCP packet fed back by a second user equipment, audio service quality parameters of sampling points, which are then reported by the transceiving module 202 to the decision-making device.

After the transceiving module 301 receives the audio service quality parameters of the sampling points, the data cleaning module 302 cleans the audio service quality parameters of the sampling points, to remove audio service quality parameters of repetitive and abnormal sampling points, and obtain audio service quality parameters of effective sampling points.

The link quality assessment module 303 determines a link quality score F of the current sending link of the first user equipment according to the correspondence between the link quality score and the audio service quality parameter which is described in step 102.

The link handover decision-making module 304 makes a decision according to two models in optional steps in step 103, to determine whether to perform link handover.

The request interval decision-making module 305 makes a decision about a time interval to a next request for link decision-making according to $Period = Period_0 + n * \Delta$.

When sending a link decision to the first user equipment, the transceiving module 301 delivers the time interval $Period$ to the next request for link decision-making.

Reference may be made to a part of the process described with reference to FIG. 2 for understanding of the specific process of implementing functions of the modules shown in FIG. 5, which is not repeated here.

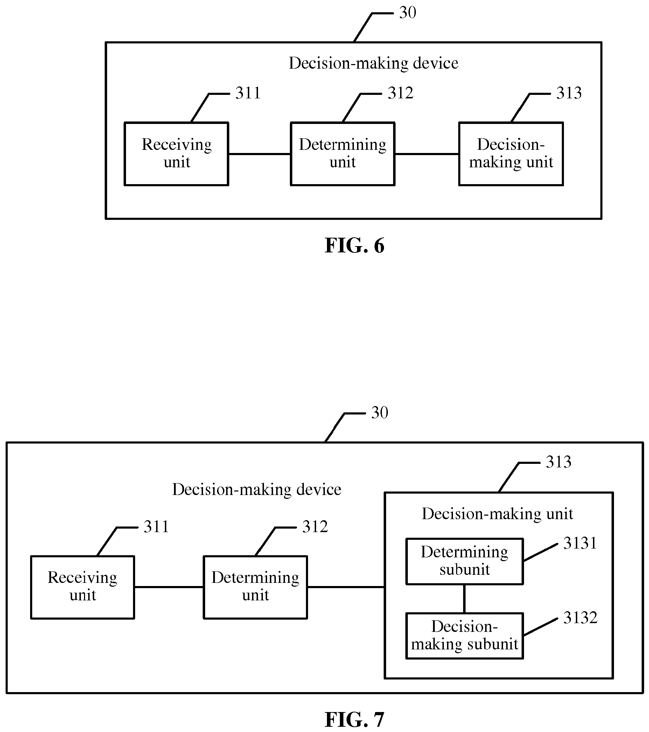

Referring to FIG. 6, a decision-making device 30 is provided according to an embodiment of the present disclosure. The decision-making device 30 is applied to the link decision-making system. The link decision-making system further includes a first user equipment and a second user equipment that are in a Voice over Internet Protocol VoIP call status and a transit server. A first link directly connecting the first user equipment to the second user equipment and a second link that transits by using the transit server existing between the first user equipment and the second user equipment. The decision-making device includes a receiving unit 311, a determining unit 312, and a decision-making unit 313.

The receiving unit 311 is configured to receive audio service quality data reported by the first user equipment. The audio service quality data is determined by the second user equipment according to audio data sent by the first user equipment and is fed back to the first user equipment;

The determining unit 312 is configured to determine, according to the audio service quality data received by the receiving unit 311, a link quality score of a current sending link of the first user equipment. The current sending link is the first link or the second link; and

The decision-making unit 313 is configured to make, according to the link quality score of the current sending link which is determined by the determining unit 312, a decision about using the first link or the second link as a subsequent sending link of the first user equipment.

Compared with the conventional technology, where a VoIP call is made by using either a link for direct connection or a link for transit, the two links each having disadvantages, the decision-making device provided in the present disclosure may make, according to the link quality of the current sending link of the first user equipment, a decision about selecting the first link or the second link as the subsequent sending link, so as to ensure that a better link for transmitting a data stream of the VoIP is selected, thereby improving the Service of Quality of the VoIP.

Optionally, the determining unit 312 is configured to:

clean the audio service quality data, and determine audio service quality data of an effective sampling point in the audio service quality data; and

determine, according to an audio service quality parameter of the effective sampling point and a correspondence between the link quality score and the audio service quality parameter, the link quality score of the current sending link of the first user equipment.

Optionally, referring to FIG. 7, in a decision-making device according to another embodiment of the present disclosure, the decision-making unit 313 includes:

a determining subunit 3131, configured to determine a decision-making model according to stored historical link information; and

a decision-making subunit 3132, configured to determine, according to the link quality score of the current sending link and the decision-making model that is determined by the determining subunit 3131, the first link or the second link as the subsequent sending link of the first user equipment.

Optionally, the determining subunit 3131 is configured to: in a case that the historical link information includes only information about one type of link, determine the decision-making model as an absolute threshold decision-making model, where the one type of link is the first link or the second link, and the absolute threshold decision-making model is expressed by the following equation:

$$Threshold_{abs} = Threshold_{abs\,0} - X^n,$$

where $Threshold_{abs}$ is a current absolute threshold, $Threshold_{abs\,0}$ is an initial absolute threshold, X is an attenuation parameter, and n is a total number of times of link handover up to the present time instant.

In this case, the decision-making subunit 3132 is configured to: in a case of determining that the link quality score of the current sending link is less than the current absolute threshold $Threshold_{abs}$, make a decision about using another link as the subsequent sending link of the first user equipment, where the another link is the second link or the first link.

Optionally, the determining subunit 3131 is configured to: in a case that the historical link information includes information about two types of links, determine the decision-making model as a relative threshold decision-making model, which is expressed by the following equation:

$$Threshold_{rel} = Threshold_{rel\,0} - X^n,$$

where $Threshold_{rel}$ is a current relative threshold, $Threshold_{rel0}$ is an initial relative threshold, X is an attenuation parameter, and n is a total number of times of link handover up to the present time instant.

In this case, the decision-making subunit 3132 is configured to: in a case of determining that a difference between the link quality score of the current sending link and a quality score of another link is less than the current relative threshold $Threshold_{rel}$, make a decision about using the another link as the subsequent sending link of the first user equipment, where if the current sending link is the first link, the another link is the second link, and if the current sending link is the second link, the another link is the first link.

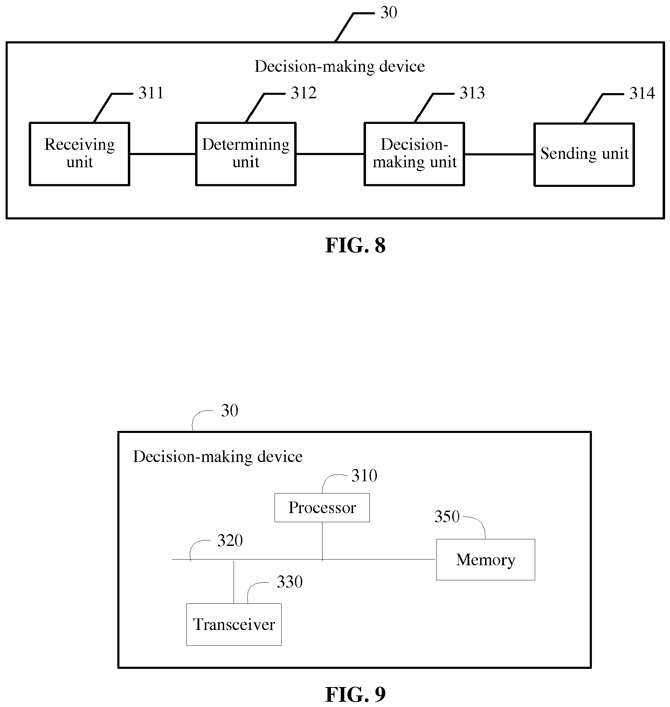

Optionally, referring to FIG. 8, a decision-making device according to another embodiment of the present disclosure further includes a sending unit 314.

The sending unit 314 is configured to send a link handover instruction to the first user equipment.

The link handover instruction is used to instruct:

the first user equipment to hand over from the first link to the second link if the current sending link is the first link, and the subsequent sending link is the second link; and
the first user equipment to hand over from the second link to the first link if the current sending link is the second link, and the subsequent sending link is the first link.

Optionally, in a decision-making device according to another embodiment of the present disclosure, the determining unit 312 is further configured to: in a case that the subsequent sending link is the same as the current sending link, and a duration for which the current sending link is used exceeds N decision-making periods, determine, according to the following equation, a time interval to a next request for link decision-making, where N is an integer greater than 1,

$$Period = Period_0 + N * \Delta,$$

where $Period_0$ is an initial time interval, and $\Delta$ is a link stability coefficient.

In this case, the sending unit 314 is further configured to send the time interval *Period* determined by the determining unit to the first user equipment.

FIG. 9 is a schematic structural diagram of a decision-making device 30 according to an embodiment of the present disclosure. The decision-making device 30 is applied to a link decision-making system. The link decision-making system further includes a first user equipment and a second user equipment that are in a Voice over Internet Protocol VoIP call status and a transit server. A first link directly connecting the first user equipment to the second user equipment and a second link that transits by using the transit server exist between the first user equipment and the second user equipment. The decision-making device 30 includes a processor 310, a memory 350, and a transceiver 330. The memory 350 may include a read-only memory and a random access memory, and provides operating instructions and data to the processor 310. A part of the memory 350 may further include a non-volatile RAM (NVRAM).

In some implementations, the memory 350 stores the following elements: an executable module, a data structure, a subset thereof, or an extension set thereof.

In this embodiment of the present disclosure, by calling operating instructions (the operating instructions may be stored in an operating system) stored in the memory 350,

audio service quality data reported by the first user equipment is received by using the transceiver 330, the audio service quality data being determined by the second user equipment according to audio data sent by the first user equipment and being fed back to the first user equipment;

a link quality score of a current sending link of the first user equipment is determined according to the audio service quality data, the current sending link being the first link or the second link; and

a decision about using the first link or the second link as a subsequent sending link of the first user equipment is made according to the link quality score of the current sending link.

Compared with the conventional technology, where a VoIP call is made by using either a link for direct connection or a link for transit, the two links each having disadvantages, the decision-making device provided in the present disclosure may make, according to the link quality of the current sending link of the first user equipment, a decision about selecting the first link or the second link as the subsequent sending link, so as to ensure that a better link for transmitting a data stream of the VoIP is selected, thereby improving the Service of Quality of the VoIP.

The processor 310 controls operation of the decision-making device 30. The processor 310 may also be referred to as a central processing unit (CPU). The memory 350 may include a ROM and a RAM, and provides instructions and data to the processor 310. A part of the memory 350 may further include an NVRAM. During specific application, all components of the decision-making device 30 are coupled together by using a bus system 320, and in addition to a data bus, the bus system 320 may further include a power source bus, a control bus, a status signal bus, and the like. However, for ease of clear description, all types of buses in the drawing are marked as the bus system 320.

The foregoing methods disclosed in the embodiments of the present disclosure may be applied to the processor 310, or may be implemented by the processor 310. The processor 310 may be an integrated circuit chip, having a capability of processing a signal. In an implementation process, steps of the foregoing methods may be completed by using an integrated logical circuit of hardware in the processor 310 or an instruction in a form of software. The processor 310 may be a general processing unit, a digital signal processor (DSP), an application-specific integrated circuit (ASIC), a field programmable gate array (FPGA), or another programmable logic device, discrete gate or transistor logic device, or discrete hardware assembly. The methods, steps, and logical block diagrams disclosed in the embodiments of the present disclosure may be implemented or performed. The general processing unit may be a microprocessor, any regular processor, or the like. In combination with the methods disclosed in the embodiments of the present disclosure, steps may be represented directly as being implemented by a hardware decoding processor, or implemented by a combination of hardware and software modules in a decoding processor. A software module may be located in a mature storage medium in the art, such as a random access memory, a flash memory, a read-only memory, a programmable read-only memory, an electrical erasable programmable memory, a register, or the like. The storage medium is located in the memory 350, and the processor 310 reads information in the memory 350 and completes the steps of the foregoing methods in combination with hardware thereof.

Optionally, the processor 310 is configured to:

clean the audio service quality data, and determine audio service quality data of an effective sampling point in the audio service quality data; and

determine, according to an audio service quality parameter of the effective sampling point and a correspondence between the link quality score and the audio service quality parameter, the link quality score of the current sending link of the first user equipment.

Optionally, the processor 310 is configured to:

determine a decision-making model according to stored historical link information; and

determine, according to the link quality score of the current sending link and the decision-making model, the first link or the second link as the subsequent sending link of the first user equipment.

Optionally, the processor 310 is configured to:

in a case that the historical link information includes only information about one type of link, determine the decision-making model as an absolute threshold decision-making model, where the one type of link is the first link or the second link, and the absolute threshold decision-making model is expressed by the following equation:

$$Threshold_{abs} = Threshold_{abs\,0} - X^n,$$

where $Threshold_{abs}$ is a current absolute threshold, $Threshold_{abs\,0}$ is an initial absolute threshold, X is an attenuation parameter, and n is a total number of times of link handover up to the present time instant; and
in a case of determining that the link quality score of the current sending link is less than the current absolute threshold $Threshold_{abs}$, make a decision about using another link as the subsequent sending link of the first user equipment, where the another link is the second link or the first link.

Optionally, the processor 310 is configured to:

in a case that the historical link information includes information about two types of links, determine the decision-making model as a relative threshold decision-making model, which is expressed by the following equation:

$$Threshold_{rel} = Threshold_{rel\,0} - X^n,$$

where $Threshold_{rel}$ is a current relative threshold, $Threshold_{rel\,0}$ is an initial relative threshold, X is an attenuation parameter, and n is a total number of times of link handover up to the present time instant; and
in a case of determining that a difference between the link quality score of the current sending link and a quality score of another link is less than the current relative threshold $Threshold_{rel}$, make a decision about using the another link as the subsequent sending link of the first user equipment, where if the current sending link is the first link, the another link is the second link, and if the current sending link is the second link, the another link is the first link.

Optionally, the transceiver 330 is further configured to send a link handover instruction to the first user equipment, where
the link handover instruction is used to instruct:

the first user equipment to hand over from the first link to the second link if the current sending link is the first link, and the subsequent sending link is the second link; and
the first user equipment to hand over from the second link to the first link if the current sending link is the second link, and the subsequent sending link is the first link.

Optionally, the transceiver 330 is further configured to send the storage address to the media terminal device, so that the media terminal device obtains the requested media resource from the storage address.
Optionally, the processor 310 is further configured to: in a case that the subsequent sending link is the same as the current sending link, and a duration for which the current sending link is used exceeds N decision-making periods, determine, according to the following equation, a time interval to a next request for link decision-making, where N is an integer greater than 1,

$$Period = Period_0 + N * \Delta,$$

where $Period_0$ is an initial time interval, and $\Delta$ is a link stability coefficient; and
the transceiver 330 is further configured to send the time interval $Period$ to the first user equipment.
A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

**Claims**

1. A link decision-making method applied to a link decision-making system, wherein the link decision-making system comprises a first user equipment and a second user equipment that are in a Voice over Internet Protocol (VoIP) call status, a transit server, and a decision-making device, wherein the first user equipment is directly connected with the second user equipment through a first link comprising no node other than the first user equipment and the second user equipment, and the first user equipment is also connected with the second user equipment through a second link comprising the transit server existing between the first user equipment and the second user equipment, and the method comprises:

receiving, by the decision-making device, audio service quality data reported by the first user equipment (101), the audio service quality data being determined by the second user equipment according to audio data sent by the first user equipment and being fed back to the first user equipment;

determining, by the decision-making device according to the audio service quality data, a link quality score of a current sending link of the first user equipment (102), the current sending link being the first link or the second link; and

making, by the decision-making device according to the link quality score of the current sending link, a decision about using the first link or the second link as a subsequent sending link of the first user equipment (103), wherein the method further comprises:

in a case that the subsequent sending link is the same as the current sending link, and a duration for which the current sending link is used exceeds N decision-making periods, determining, by the decision-making device according to the following equation, a time interval to a next request for link decision-making, wherein N is an integer greater than 1,

$$\text{Period} = \text{Period}_0 + N * \Delta,$$

wherein $Period_0$ is an initial time interval, and $\Delta$ is a link stability coefficient; and

sending, by the decision-making device, the time interval $Period$ to the first user equipment.

2. The method according to claim 1, wherein the determining, by the decision-making device according to the audio service quality data, the link quality score of the current sending link of the first user equipment (102) comprises:

cleaning, by the decision-making device, the audio service quality data, and determining, by the decision-making device, audio service quality data of an effective sampling point in the audio service quality data; and

determining, by the decision-making device according to an audio service quality parameter of the effective sampling point and a correspondence between the link quality score and the audio service quality parameter, the link quality score of the current sending link of the first user equipment.

3. The method according to claim 2, wherein the making, by the decision-making device according to the link quality score of the current sending link, the decision about using the first link or the second link as the subsequent sending link of the first user equipment (103) comprises:

determining, by the decision-making device, a decision-making model according to stored historical link information; and

determining, by the decision-making device according to the link quality score of the current sending link and the decision-making model, the first link or the second link as the subsequent sending link of the first user equipment.

4. The method according to claim 3, wherein the determining, by the decision-making device, the decision-making model according to the stored historical link information comprises:

in a case that the historical link information comprises only information about one type of link, determining the decision-making model as an absolute threshold decision-making model, wherein the one type of link is the first link or the second link, and the absolute threshold decision-making model is expressed by the following equation:

$$Threshold_{abs} = Threshold_{abs0} - X^n,$$

wherein $Threshold_{abs}$ is a current absolute threshold, $Threshold_{abs\,0}$ is an initial absolute threshold, X is an attenuation parameter, and n is a total number of times of link handover up to the present time instant; and

the determining, by the decision-making device according to the link quality score of the current sending link and the decision-making model, the first link or the second link as the subsequent sending link of the first user equipment comprises:
in a case of determining that the link quality score of the current sending link is less than the current absolute threshold $Threshold_{abs}$ , making, by the decision-making device, a decision about using another link as the subsequent sending link of the first user equipment, wherein the another link is the second link or the first link.

5. The method according to claim 3, wherein the determining, by the decision-making device, the decision-making model according to stored historical link information comprises:

in a case that the historical link information comprises information about two types of links, determining the decision-making model as a relative threshold decision-making model, which is expressed by the following equation:

$$Threshold_{rel} = Threshold_{rel0} - X^{n},$$

wherein $Threshold_{rel}$ is a current relative threshold, $Threshold_{rel0}$ is an initial relative threshold, X is an attenuation parameter, and n is a total number of times of link handover up to the present time instant; and
the determining, by the decision-making device according to the link quality score of the current sending link and the decision-making model, the first link or the second link as the subsequent sending link of the first user equipment comprises:
in a case of determining that a difference between the link quality score of the current sending link and a quality score of another link is less than the current relative threshold $Threshold_{rel}$, making, by the decision-making device, a decision about using the another link as the subsequent sending link of the first user equipment, wherein if the current sending link is the first link, the another link is the second link, and if the current sending link is the second link, the another link is the first link.

6. The method according to any one of claims 1 to 5, further comprising:

sending, by the decision-making device, a link handover instruction to the first user equipment, wherein the link handover instruction is used to instruct:

the first user equipment to hand over from the first link to the second link if the current sending link is the first link, and the subsequent sending link is the second link; and
the first user equipment to hand over from the second link to the first link if the current sending link is the second link, and the subsequent sending link is the first link.

7. A decision-making device (30), the decision-making device (30) being applied to a link decision-making system, the link decision-making system further comprising a first user equipment and a second user equipment that are in a Voice over Internet Protocol (VoIP) call status and a transit server, wherein the first user equipment is directly connected with the second user equipment through a first link comprising no node other than the first user equipment and the second user equipment, and the first user equipment is also connected with the second user equipment through a second link comprising the transit server existing between the first user equipment and the second user equipment, and the decision-making device (30) comprises:

a receiving unit (311), configured to receive audio service quality data reported by the first user equipment, the audio service quality data being determined by the second user equipment according to audio data sent by the first user equipment and being fed back to the first user equipment;
a determining unit (312), configured to determine, according to the audio service quality data received by the receiving unit (311), a link quality score of a current sending link of the first user equipment, the current sending link being the first link or the second link; and
a decision-making unit (313), configured to make, according to the link quality score of the current sending link which is determined by the determining unit (312), a decision about using the first link or the second link as a subsequent sending link of the first user equipment,
wherein the determining unit (312) is further configured to: in a case that the subsequent sending link is the same as the current sending link, and a duration for which the current sending link is used exceeds N decision-making periods, determine, according to the following equation, a time interval to a next request for link decision-making, wherein N is an integer greater than 1,

$$Period = Period_0 + N * \Delta,$$

wherein $Period_0$ is an initial time interval, and $\Delta$ is a link stability coefficient; and the decision-making device (30) further comprises:
a sending unit (314) configured to send the time interval $Period$ determined by the determining unit (312) to the first user equipment.

8. The decision-making device (30) according to claim 7, wherein
the determining unit (312) is configured to:

    clean the audio service quality data, and determine audio service quality data of an effective sampling point in the audio service quality data; and
    determine, according to an audio service quality parameter of the effective sampling point and a correspondence between the link quality score and the audio service quality parameter, the link quality score of the current sending link of the first user equipment.

9. The decision-making device (30) according to claim 8, wherein the decision-making unit (313) comprises:

    a determining subunit (3131), configured to determine a decision-making model according to stored historical link information; and
    a decision-making subunit (3132), configured to determine, according to the link quality score of the current sending link and the decision-making model that is determined by the determining subunit (3131), the first link or the second link as the subsequent sending link of the first user equipment.

10. The decision-making device (30) according to claim 9, wherein
the determining subunit (3131) is configured to: in a case that the historical link information comprises only information about one type of link, determine the decision-making model as an absolute threshold decision-making model, wherein the one type of link is the first link or the second link, and the absolute threshold decision-making model is expressed by the following equation:

$$Threshold_{abs} = Threshold_{abs0} - X^n$$

wherein $Threshold_{abs}$ is a current absolute threshold, $Threshold_{abs0}$ is an initial absolute threshold, X is an attenuation parameter, and n is a total number of times of link handover up to the present time instant; and
the decision-making subunit (3131) is configured to: in a case of determining that the link quality score of the current sending link is less than the current absolute threshold $Threshold_{abs}$, make a decision about using another link as the subsequent sending link of the first user equipment, wherein the another link is the second link or the first link.

11. The decision-making device (30) according to claim 9, wherein
the determining subunit (3131) is configured to: in a case that the historical link information comprises information about two types of links, determine the decision-making model as a relative threshold decision-making model, which is expressed by the following equation:

$$Threshold_{rel} = Threshold_{rel0} - X^n,$$

wherein $Threshold_{rel}$ is a current relative threshold, $Threshold_{rel0}$ is an initial relative threshold, X is an attenuation parameter, and n is a total number of times of link handover up to the present time instant; and
the decision-making subunit (3132) is configured to: in a case of determining that a difference between the link quality score of the current sending link and a quality score of another link is less than the current relative threshold $Threshold_{rel}$, make a decision about using the another link as the subsequent sending link of the first user equipment, wherein if the current sending link is the first link, the another link is the second link, and if the current sending link is the second link, the another link is the first link.

12. The decision-making device (30) according to any one of claims 7 to 11, wherein the sending unit (314) is further configured to send a link handover instruction to the first user equipment, wherein
the link handover instruction is used to instruct:

the first user equipment to hand over from the first link to the second link if the current sending link is the first link, and the subsequent sending link is the second link; and
the first user equipment to hand over from the second link to the first link if the current sending link is the second link, and the subsequent sending link is the first link.

13. A link decision-making system, comprising: a first user equipment and a second user equipment that are in a Voice over Internet Protocol (VoIP) call status, a transit server, and a decision-making device, wherein the first user equipment is directly connected with the second user equipment through a first link comprising no node other than the first user equipment and the second user equipment, and the first user equipment is also connected with the second user equipment through a second link comprising the transit server existing between the first user equipment and the second user equipment, and
the decision-making device is the decision-making device (30) according to any one of claims 7 to 12.

**Patentansprüche**

1. Verbindungsentscheidungsverfahren, das auf ein Verbindungsentscheidungssystem angewendet wird, wobei das Verbindungsentscheidungssystem ein erstes Endgerät und ein zweites Endgerät, die sich in einem Anrufstatus über Voice over Internet Protocol (VoIP) befinden, einen Transit-Server und eine Entscheidungsvorrichtung umfasst, wobei das erste Endgerät direkt mit dem zweiten Endgerät über eine erste Verbindung, die keinen anderen Knoten als das erste Endgerät und das zweite Endgerät umfasst, verbunden ist, und das erste Endgerät zudem mit dem zweiten Endgerät über eine zweite Verbindung, die den Transit-Server, der zwischen dem ersten Endgerät und dem zweiten Endgerät existiert, umfasst, verbunden ist, und das Verfahren umfasst:

Empfangen von Audio-Service-Qualitätsdaten, die von dem ersten Endgerät (101) gemeldet werden, durch die Entscheidungsvorrichtung, wobei die Audio-Service-Qualitätsdaten durch das zweite Endgerät gemäß den von dem ersten Endgerät gesendeten Audiodaten bestimmt werden und zu dem ersten Endgerät zurückgeführt werden;
Bestimmen einer Verbindungsqualitätsbewertung einer aktuellen Sendeverbindung des ersten Endgeräts (102) durch die Entscheidungsvorrichtung gemäß den Audio-Service-Qualitätsdaten, wobei die aktuelle Sendeverbindung die erste Verbindung oder die zweite Verbindung ist; und
Treffen einer Entscheidung über die Verwendung der ersten Verbindung oder der zweiten Verbindung als nachfolgende Sendeverbindung des ersten Endgeräts (103) durch die Entscheidungsvorrichtung gemäß der Verbindungsqualitätsbewertung der aktuellen Sendeverbindung,
wobei das Verfahren ferner umfasst:

in einem Fall, in dem die nachfolgende Sendeverbindung die gleiche wie die aktuelle Sendeverbindung ist, und eine Dauer, für die die aktuelle Sendeverbindung verwendet wird, N Entscheidungsperioden überschreitet, Bestimmen eines Zeitintervalls bis zu einer nächsten Abfrage für eine Verbindungsentscheidung durch die Entscheidungsvorrichtung gemäß der folgenden Gleichung, wobei N eine ganze Zahl größer als 1 ist,

$$Periode = Periode_0 + N * \Delta,$$

wobei $Periode_0$ ein Anfangszeitintervall, und $\Delta$ ein Verbindungsstabilitätskoeffizient ist; und
Senden des Zeitintervalls $Periode$ an das erste Endgerät durch die Entscheidungsvorrichtung.

2. Verfahren nach Anspruch 1, wobei das Bestimmen der Verbindungsqualitätsbewertung der aktuellen Sendeverbindung des ersten Endgeräts (102) durch die Entscheidungsvorrichtung gemäß den Audio-Service-Qualitätsdaten umfasst:

Bereinigen der Audio-Service-Qualitätsdaten durch die Entscheidungsvorrichtung und Bestimmen von Audio-Service-Qualitätsdaten eines effektiven Abtastpunktes in den Audio-Service-Qualitätsdaten durch die Entscheidungsvorrichtung; und

Bestimmen der Verbindungsqualitätsbewertung der aktuellen Sendeverbindung des ersten Endgeräts durch die Entscheidungsvorrichtung gemäß einem Audio-Service-Qualitätsparameter des effektiven Abtastpunktes und einer Übereinstimmung zwischen der Verbindungsqualitätsbewertung und dem Audio-Service-Qualitätsparameter.

3. Verfahren nach Anspruch 2, wobei das Treffen der Entscheidung über die Verwendung der ersten Verbindung oder der zweiten Verbindung als nachfolgende Sendeverbindung des ersten Endgeräts (103) durch die Entscheidungsvorrichtung gemäß der Verbindungsqualitätsbewertung der aktuellen Sendeverbindung umfasst:

Bestimmen eines Entscheidungsmodells gemäß gespeicherter historischer Verbindungsinformationen durch die Entscheidungsvorrichtung; und
Bestimmen der ersten Verbindung oder der zweiten Verbindung als nachfolgende Sendeverbindung des ersten Endgeräts durch die Entscheidungsvorrichtung gemäß der Verbindungsqualitätsbewertung der aktuellen Sendeverbindung und des Entscheidungsmodells.

4. Verfahren nach Anspruch 3, wobei das Bestimmen des Entscheidungsmodells gemäß den gespeicherten historischen Verbindungsinformationen durch die Entscheidungsvorrichtung umfasst:

in einem Fall, in dem die historischen Verbindungsinformationen nur Informationen über einen Verbindungstyp umfassen, Bestimmen des Entscheidungsmodells als ein Entscheidungsmodell mit absolutem Grenzwert, wobei der eine Verbindungstyp die erste Verbindung oder die zweite Verbindung ist, und das absolute Entscheidungsmodell mit absolutem Grenzwert durch die folgende Gleichung ausgedrückt wird:

$$Grenzwert_{abs} = Grenzwert_{abs0} - X^n,$$

wobei $Grenzwert_{abs}$ ein aktueller absoluter Grenzwert ist, $Grenzwert_{abs0}$ ein anfänglicher absoluter Grenzwert ist, X ein Dämpfungsparameter ist, und n eine Gesamtzahl von Verbindungsübergaben bis zum gegenwärtigen Zeitpunkt ist; und
das Bestimmen der ersten Verbindung oder der zweiten Verbindung als nachfolgende Sendeverbindung des ersten Endgeräts durch die Entscheidungsvorrichtung gemäß der Verbindungsqualitätsbewertung der aktuellen Sendeverbindung und des Entscheidungsmodells umfasst:
in einem Fall des Bestimmens, dass die Verbindungsqualitätsbewertung der aktuellen Sendeverbindung geringer als der aktuelle absolute Grenzwert $Grenzwert_{abs}$ ist, Treffen einer Entscheidung über die Verwendung einer anderen Verbindung als die nachfolgende Sendeverbindung des ersten Endgeräts durch die Entscheidungsvorrichtung, wobei die andere Verbindung die zweite Verbindung oder die erste Verbindung ist.

5. Verfahren nach Anspruch 3, wobei das Bestimmen des Entscheidungsmodells gemäß gespeicherter historischer Verbindungsinformationen durch die Entscheidungsvorrichtung umfasst:

in einem Fall, in dem die historischen Verbindungsinformationen Informationen über zwei Verbindungstypen umfassen, Bestimmen des Entscheidungsmodells als ein Entscheidungsmodell mit relativem Grenzwert, das durch die folgende Gleichung ausgedrückt wird:

$$Grenzwert_{rel} = Grenzwert_{rel0} - X^n,$$

wobei $Grenzwert_{rel}$ ein aktueller relativer Grenzwert ist, $Grenzwert_{rel0}$ ein anfänglicher relativer Grenzwert ist, X ein Dämpfungsparameter ist, und n eine Gesamtzahl von Verbindungsübergaben bis zum gegenwärtigen Zeitpunkt ist; und
das Bestimmen der ersten Verbindung oder der zweiten Verbindung als nachfolgende Sendeverbindung des ersten Endgeräts durch die Entscheidungsvorrichtung gemäß der Verbindungsqualitätsbewertung der aktuellen Sendeverbindung und des Entscheidungsmodells umfasst:
in einem Fall des Bestimmens, dass eine Differenz zwischen der Verbindungsqualitätsbewertung der aktuellen Sendeverbindung und einer Verbindungsqualitätsbewertung einer anderen Verbindung kleiner als der aktuelle relative Grenzwert $Grenzwert_{rel}$ ist, Treffen einer Entscheidung über die Verwendung der anderen Verbindung als die nachfolgende Sendeverbindung des ersten Endgeräts durch die Entscheidungsvorrichtung, wobei, wenn die aktuelle Sendeverbindung die erste Verbindung ist, die andere Verbindung die zweite Verbindung ist, und wenn die aktuelle Sendeverbindung die zweite Verbindung ist, die andere Verbindung die erste Verbindung ist.

6. Verfahren nach einem der Ansprüche 1 bis 5, ferner umfassend:

Senden einer Verbindungsübergabeanweisung an das erste Endgerät durch die Entscheidungsvorrichtung, wobei
die Verbindungsübergabeanweisung zur Anweisung verwendet wird, um:

das erste Endgerät von der ersten Verbindung zu der zweiten Verbindung zu übergeben, wenn die aktuelle Sendeverbindung die erste Verbindung ist, und die nachfolgende Sendeverbindung die zweite Verbindung ist; und
das erste Endgerät von der zweiten Verbindung zu der ersten Verbindung zu übergeben, wenn die aktuelle Sendeverbindung die zweite Verbindung ist, und die nachfolgende Sendeverbindung die erste Verbindung ist.

7. Entscheidungsvorrichtung (30), wobei die Entscheidungsvorrichtung (30) auf ein Verbindungsentscheidungssystem angewendet wird, wobei das Verbindungsentscheidungssystem ferner ein erstes Endgerät und ein zweites Endgerät, die sich in einem Anrufstatus über Voice over Internet Protocol (VoIP) befinden, und einen Transit-Server umfasst, wobei das erste Endgerät direkt mit dem zweiten Endgerät über eine erste Verbindung, die keinen anderen Knoten als das erste Endgerät und das zweite Endgerät umfasst, verbunden ist, und das erste Endgerät auch mit dem zweiten Endgerät über eine zweite Verbindung, die den Transit-Server, der zwischen dem ersten Endgerät und dem zweiten Endgerät existiert, umfasst, verbunden ist, und die Entscheidungsvorrichtung (30) umfasst:

eine Empfangseinheit (311), welche ausgestaltet ist, Audio-Service-Qualitätsdaten, die von dem ersten Endgerät (101) gemeldet werden, zu empfangen, wobei die Audio-Service-Qualitätsdaten durch das zweite Endgerät gemäß den von dem ersten Endgerät gesendeten Audiodaten bestimmt werden und zu dem ersten Endgerät zurückgeführt werden;
eine Bestimmungseinheit (312), welche ausgestaltet ist, eine Verbindungsqualitätsbewertung einer aktuellen Sendeverbindung des ersten Endgeräts gemäß den Audio-Service-Qualitätsdaten, welche von der Empfangseinheit (311) empfangen werden, zu bestimmen, wobei die aktuelle Sendeverbindung die erste Verbindung oder die zweite Verbindung ist; und
eine Entscheidungseinheit (313), welche ausgestaltet ist, eine Entscheidung über die Verwendung der ersten Verbindung oder der zweiten Verbindung als nachfolgende Sendeverbindung des ersten Endgeräts gemäß der Verbindungsqualitätsbewertung der aktuellen Sendeverbindung, welche durch die Bestimmungseinheit (312) bestimmt wird, zu treffen,
wobei die Bestimmungseinheit (312) ferner ausgestaltet ist, um: in einem Fall, in dem die nachfolgende Sendeverbindung die gleiche wie die aktuelle Sendeverbindung ist, und eine Dauer, für die die aktuelle Sendeverbindung verwendet wird, N Entscheidungsperioden überschreitet, Bestimmen eines Zeitintervalls bis zu einer nächsten Abfrage für eine Verbindungsentscheidung gemäß der folgenden Gleichung, wobei N eine ganze Zahl größer als 1 ist,

$$Periode = Periode_0 + N * \Delta,$$

wobei $Periode_0$ ein Anfangszeitintervall, und $\Delta$ ein Verbindungsstabilitätskoeffizient ist; und die Entscheidungsvorrichtung (30) ferner umfasst:
eine Sendeinheit (314), welche ausgestaltet ist. das Zeitintervalls $Periode$, welches durch die Bestimmungseinheit (312) bestimmt wird, an das erste Endgerät zu senden.

8. Entscheidungsvorrichtung (30) nach Anspruch 7, wobei
die Bestimmungseinheit (312) ausgestaltet ist, zum:

Bereinigen der Audio-Service-Qualitätsdaten, und Bestimmen von Audio-Service-Qualitätsdaten eines effektiven Abtastpunkts in den Audio-Service-Qualitätsdaten; und
Bestimmen der Verbindungsqualitätsbewertung der aktuellen Sendeverbindung des ersten Endgeräts gemäß einem Audio-Service-Qualitätsparameter des effektiven Abtastpunkts und einer Übereinstimmung zwischen der Verbindungsqualitätsbewertung und dem Audio-Service-Qualitätsparameter.

9. Entscheidungsvorrichtung (30) nach Anspruch 8, wobei die Entscheidungsvorrichtung (313) umfasst:

eine Bestimmungsuntereinheit (3131), die ausgestaltet ist, ein Entscheidungsmodell gemäß gespeicherter historischer Verbindungsinformationen zu bestimmen; und
eine Entscheidungsuntereinheit (3132), die ausgestaltet ist, gemäß der Verbindungsqualitätsbewertung der aktuellen Sendeverbindung und des Entscheidungsmodells, das durch die Bestimmungsuntereinheit (3131) bestimmt wird, die erste Verbindung oder die zweite Verbindung als nachfolgende Sendeverbindung des ersten Endgeräts zu bestimmen.

10. Entscheidungsvorrichtung (30) nach Anspruch 9, wobei
die Bestimmungsuntereinheit (3131) ausgestaltet ist, dass sie: in einem Fall, in dem die historischen Verbindungsinformationen nur Informationen über einen Verbindungstyp umfassen, das Entscheidungsmodell als ein Entscheidungsmodell mit absolutem Grenzwert zu bestimmen, wobei der eine Verbindungstyp die erste Verbindung oder die zweite Verbindung ist, und das Entscheidungsmodell mit absolutem Grenzwert durch die folgende Gleichung ausgedrückt wird:

$$Grenzwert_{abs} = Grenzwert_{abs0} - X^n,$$

wobei $Grenzwert_{abs}$ ein aktueller absoluter Grenzwert ist, $Grenzwert_{abs0}$ ein anfänglicher absoluter Grenzwert ist, X ein Dämpfungsparameter ist, und n eine Gesamtzahl von Verbindungsübergaben bis zum gegenwärtigen Zeitpunkt ist; und
die Entscheidungsuntereinheit (3132) ausgestaltet ist, dass sie: in einem Fall des Bestimmens, dass die Verbindungsqualitätsbewertung der aktuellen Sendeverbindung geringer als der aktuelle absolute Grenzwert $Grenzwert_{abs}$ ist, eine Entscheidung über die Verwendung einer anderen Verbindung als die nachfolgende Sendeverbindung des ersten Endgeräts zu treffen, wobei die andere Verbindung die zweite Verbindung oder die erste Verbindung ist.

11. Entscheidungsvorrichtung (30) nach Anspruch 9, wobei
die Bestimmungsuntereinheit (3131) ausgestaltet ist, dass sie: in einem Fall, in dem die historischen Verbindungsinformationen Informationen über zwei Verbindungstypen umfassen, das Entscheidungsmodell als ein Entscheidungsmodell mit relativem Grenzwert zu bestimmen, welches durch folgende Gleichung ausgedrückt wird:

$$Grenzwert_{rel} = Grenzwert_{rel0} - X^n,$$

wobei $Grenzwert_{rel}$ ein aktueller relativer Grenzwert ist, $Grenzwert_{rel0}$ ein anfänglicher relativer Grenzwert ist, X ein Dämpfungsparameter ist, und n eine Gesamtzahl von Verbindungsübergaben bis zum gegenwärtigen Zeitpunkt ist; und
die Entscheidungsuntereinheit (3132) ausgestaltet ist, dass sie: in einem Fall des Bestimmens, dass eine Differenz zwischen der Verbindungsqualitätsbewertung der aktuellen Sendeverbindung und einer Verbindungsqualitätsbewertung einer anderen Verbindung kleiner als der aktuelle relative Grenzwert $Grenzwert_{rel}$ ist, eine Entscheidung über die Verwendung der anderen Verbindung als die nachfolgende Sendeverbindung des ersten Endgeräts zu treffen, wobei, wenn die aktuelle Sendeverbindung die erste Verbindung ist, die andere Verbindung die zweite Verbindung ist, und wenn die aktuelle Sendeverbindung die zweite Verbindung ist, die andere Verbindung die erste Verbindung ist.

12. Entscheidungsvorrichtung (30) nach einem der Ansprüche 7 bis 11, wobei die Sendeeinheit (314) ferner ausgestaltet ist, dass sie eine Verbindungsübergabeanweisung an das erste Endgerät zu senden, wobei
die Verbindungsübergabeanweisung zur Anweisung verwendet wird, um:

das erste Endgerät von der ersten Verbindung zu der zweiten Verbindung zu übergeben, wenn die aktuelle Sendeverbindung die erste Verbindung ist, und die nachfolgende Sendeverbindung die zweite Sendeverbindung ist; und
das erste Endgerät von der zweiten Verbindung zu der ersten Verbindung zu übergeben, wenn die aktuelle Sendeverbindung die zweite Verbindung ist, und die nachfolgende Sendeverbindung die erste Verbindung ist.

**13.** Verbindungsentscheidungssystem, welches umfasset: ein erstes Endgerät und ein zweites Endgerät, die sich in einem Anrufstatus über Voice over Internet Protocol (VoIP) befinden, einen Transit-Server und eine Entscheidungsvorrichtung, wobei das erste Endgerät direkt mit dem zweiten Endgerät über eine erste Verbindung, die keinen anderen Knoten als das erste Endgerät und das zweite Endgerät umfasst, verbunden ist, und das erste Endgerät zudem mit dem zweiten Endgerät über eine zweite Verbindung, die den Transit-Server, der zwischen dem ersten Endgerät und dem zweiten Endgerät existiert, umfasst, verbunden ist, und
die Entscheidungsvorrichtung die Entscheidungsvorrichtung (30) nach einem der Ansprüche 7 bis 12 ist.

## Revendications

**1.** Procédé de prise de décision sur une liaison appliqué à un système de prise de décision sur une liaison, le système de prise de décision sur une liaison comprenant un premier équipement utilisateur et un deuxième équipement utilisateur se trouvant dans un état d'appel de type Voix sur Protocole Internet (VoIP), un serveur de transit et un dispositif de prise de décision, le premier équipement utilisateur étant connecté directement au deuxième équipement utilisateur par le biais d'une première liaison ne comprenant pas d'autre nœud que le premier équipement utilisateur et le deuxième équipement utilisateur, et le premier équipement utilisateur étant également connecté au deuxième équipement utilisateur par le biais d'une deuxième liaison comprenant le serveur de transit présent entre le premier équipement utilisateur et le deuxième équipement utilisateur, et le procédé comprenant :

la réception, par le dispositif de prise de décision, de données de qualité de service audio notifiées par le premier équipement utilisateur (101), les données de qualité de service audio étant déterminées par le deuxième équipement utilisateur selon des données audio envoyées par le premier équipement utilisateur et renvoyées au premier équipement utilisateur ;
la détermination, par le dispositif de prise de décision selon les données de qualité de service audio, d'un score de qualité de liaison d'une liaison d'envoi actuelle du premier équipement utilisateur (102), la liaison d'envoi actuelle consistant en la première liaison ou la deuxième liaison ; et
la prise, par le dispositif de prise de décision selon le score de qualité de liaison de la liaison d'envoi actuelle, d'une décision concernant l'utilisation de la première liaison ou de la deuxième liaison comme liaison d'envoi suivante du premier équipement utilisateur (103),
le procédé comprenant en outre :

dans le cas où la liaison d'envoi suivante est la même que la liaison d'envoi actuelle, et une durée pendant laquelle la liaison d'envoi actuelle est utilisée dépasse N périodes de prise de décision, la détermination, par le dispositif de prise de décision selon l'équation qui suit, d'un intervalle de temps jusqu'à une prochaine requête de prise de décision sur une liaison, N étant un entier supérieur à 1,

$$Period = Period_0 + N*\Delta,$$

où $Period_0$ représente un intervalle de temps initial et $\Delta$ représente un coefficient de stabilité de liaison ; et
l'envoi, par le dispositif de prise de décision, de l'intervalle de temps $Period$ au premier équipement utilisateur.

**2.** Procédé selon la revendication 1, dans lequel la détermination, par le dispositif de prise de décision selon les données de qualité de service audio, du score de qualité de liaison de la liaison d'envoi actuelle du premier équipement utilisateur (102) comprend :

le nettoyage, par le dispositif de prise de décision, des données de qualité de service audio, et la détermination, par le dispositif de prise de décision, de données de qualité de service audio d'un point d'échantillonnage effectif dans les données de qualité de service audio ; et
la détermination, par le dispositif de prise de décision selon un paramètre de qualité de service audio du point d'échantillonnage effectif et une correspondance entre le score de qualité de liaison et le paramètre de qualité de service audio, du score de qualité de liaison de la liaison d'envoi actuelle du premier équipement utilisateur.

**3.** Procédé selon la revendication 2, dans lequel la prise, par le dispositif de prise de décision selon le score de qualité de liaison de la liaison d'envoi actuelle, de la décision concernant l'utilisation de la première liaison ou de la deuxième liaison comme liaison d'envoi suivante du premier équipement utilisateur (103) comprend :

la détermination, par le dispositif de prise de décision, d'un modèle de prise de décision selon des informations de liaison historiques enregistrées ; et
la détermination, par le dispositif de prise de décision selon le score de qualité de liaison de la liaison d'envoi actuelle et le modèle de prise de décision, de la première liaison ou de la deuxième liaison comme liaison d'envoi suivante du premier équipement utilisateur.

4. Procédé selon la revendication 3, dans lequel la détermination, par le dispositif de prise de décision, du modèle de prise de décision selon les informations de liaison historiques enregistrées comprend :

dans le cas où les informations de liaison historiques comprennent uniquement des informations concernant un seul type de liaison, la détermination du modèle de prise de décision comme un modèle de prise de décision à seuil absolu, le seul type de liaison consistant en la première liaison ou la deuxième liaison et le modèle de prise de décision à seuil absolu étant exprimé par l'équation qui suit :

$$Threshold_{abs} = Threshold_{abs0} - X^n,$$

où $Threshold_{abs}$ représente un seuil absolu actuel, $Threshold_{abs\,0}$ représente un seuil absolu initial, X représente un paramètre d'atténuation et n représente un nombre total de transferts de liaison jusqu'à l'instant présent ; et
la détermination, par le dispositif de prise de décision selon le score de qualité de liaison de la liaison d'envoi actuelle et le modèle de prise de décision, de la première liaison ou de la deuxième liaison comme liaison d'envoi suivante du premier équipement utilisateur comprend :
en cas de détermination que le score de qualité de liaison de la liaison d'envoi actuelle est inférieur au seuil absolu actuel $Threshold_{abs}$, la prise, par le dispositif de prise de décision, d'une décision concernant l'utilisation d'une autre liaison comme liaison d'envoi suivante du premier équipement utilisateur, l'autre liaison consistant en la deuxième liaison ou la première liaison.

5. Procédé selon la revendication 3, dans lequel la détermination, par le dispositif de prise de décision, du modèle de prise de décision selon des informations de liaison historiques enregistrées comprend :

dans le cas où les informations de liaison historiques comprennent des informations concernant deux types de liaisons, la détermination du modèle de prise de décision comme un modèle de prise de décision à seuil relatif, lequel est exprimé par l'équation qui suit :

$$Threshold_{rel} = Threshold_{rel0} - X^n,$$

où $Threshold_{rel}$ représente un seuil relatif actuel, $Threshold_{rel0}$ représente un seuil relatif initial, X représente un paramètre d'atténuation et n représente un nombre total de transferts de liaison jusqu'à l'instant présent ; et
la détermination, par le dispositif de prise de décision selon le score de qualité de liaison de la liaison d'envoi actuelle et le modèle de prise de décision, de la première liaison ou de la deuxième liaison comme liaison d'envoi suivante du premier équipement utilisateur comprend :
en cas de détermination qu'une différence entre le score de qualité de liaison de la liaison d'envoi actuelle et un score de qualité d'une autre liaison est inférieur au seuil relatif actuel $Threshold_{rel}$, la prise, par le dispositif de prise de décision, d'une décision concernant l'utilisation de l'autre liaison comme liaison d'envoi suivante du premier équipement utilisateur ; si la liaison d'envoi actuelle consiste en la première liaison, l'autre liaison consistant en la deuxième liaison et, si la liaison d'envoi actuelle consiste en la deuxième liaison, l'autre liaison consistant en la première liaison.

6. Procédé selon l'une quelconque des revendications 1 à 5, comprenant en outre :

l'envoi, par le dispositif de prise de décision, d'une instruction de transfert de liaison au premier équipement utilisateur,
l'instruction de transfert de liaison servant à donner pour instruction :

au premier équipement utilisateur d'effectuer un transfert de la première liaison à la deuxième liaison si la liaison d'envoi actuelle consiste en la première liaison et la liaison d'envoi suivante consiste en la deuxième liaison ; et

au premier équipement utilisateur d'effectuer un transfert de la deuxième liaison à la première liaison si la liaison d'envoi actuelle consiste en la deuxième liaison et la liaison d'envoi suivante consiste en la première liaison.

7. Dispositif de prise de décision (30), le dispositif de prise de décision (30) étant appliqué à un système de prise de décision sur une liaison, le système de prise de décision sur une liaison comprenant en outre un premier équipement utilisateur et un deuxième équipement utilisateur se trouvant dans un état d'appel de type Voix sur Protocole Internet (VoIP) et un serveur de transit, le premier équipement utilisateur étant connecté directement au deuxième équipement utilisateur par le biais d'une première liaison ne comprenant pas d'autre nœud que le premier équipement utilisateur et le deuxième équipement utilisateur, et le premier équipement utilisateur étant également connecté au deuxième équipement utilisateur par le biais d'une deuxième liaison comprenant le serveur de transit présent entre le premier équipement utilisateur et le deuxième équipement utilisateur, et le dispositif de prise de décision (30) comprenant :

une unité de réception (311), configurée pour recevoir des données de qualité de service audio notifiées par le premier équipement utilisateur, les données de qualité de service audio étant déterminées par le deuxième équipement utilisateur selon des données audio envoyées par le premier équipement utilisateur et renvoyées au premier équipement utilisateur ;

une unité de détermination (312), configurée pour déterminer, selon les données de qualité de service audio reçues par l'unité de réception (311), un score de qualité de liaison d'une liaison d'envoi actuelle du premier équipement utilisateur, la liaison d'envoi actuelle consistant en la première liaison ou la deuxième liaison ; et

une unité de prise de décision (313), configurée pour prendre, selon le score de qualité de liaison de la liaison d'envoi actuelle qui est déterminé par l'unité de détermination (312), une décision concernant l'utilisation de la première liaison ou de la deuxième liaison comme liaison d'envoi suivante du premier équipement utilisateur, l'unité de détermination (312) étant configurée en outre pour : dans le cas où la liaison d'envoi suivante est la même que la liaison d'envoi actuelle, et une durée pendant laquelle la liaison d'envoi actuelle est utilisée dépasse N périodes de prise de décision, déterminer, selon l'équation qui suit, un intervalle de temps jusqu'à une prochaine requête de prise de décision sur une liaison, N étant un entier supérieur à 1,

$$Period = Period_0 + N*\Delta,$$

où $Period_0$ représente un intervalle de temps initial et $\Delta$ représente un coefficient de stabilité de liaison ; et le dispositif de prise de décision (30) comprenant en outre :

une unité d'envoi (314) configurée pour envoyer l'intervalle de temps *Period*, déterminé par l'unité de détermination (312), au premier équipement utilisateur.

8. Dispositif de prise de décision (30) selon la revendication 7, dans lequel l'unité de détermination (312) est configurée pour :

nettoyer les données de qualité de service audio, et déterminer des données de qualité de service audio d'un point d'échantillonnage effectif dans les données de qualité de service audio ; et

déterminer, selon un paramètre de qualité de service audio du point d'échantillonnage effectif et une correspondance entre le score de qualité de liaison et le paramètre de qualité de service audio, le score de qualité de liaison de la liaison d'envoi actuelle du premier équipement utilisateur.

9. Dispositif de prise de décision (30) selon la revendication 8, dans lequel l'unité de prise de décision (313) comprend :

une sous-unité de détermination (3131), configurée pour déterminer un modèle de prise de décision selon des informations de liaison historiques enregistrées ; et

une sous-unité de prise de décision (3132), configurée pour déterminer, selon le score de qualité de liaison de la liaison d'envoi actuelle et le modèle de prise de décision qui est déterminé par la sous-unité de détermination (3131), la première liaison ou la deuxième liaison comme liaison d'envoi suivante du premier équipement utilisateur.

**10.** Dispositif de prise de décision (30) selon la revendication 9, dans lequel
la sous-unité de détermination (3131) est configurée pour : dans le cas où les informations de liaison historiques comprennent uniquement des informations concernant un seul type de liaison, déterminer le modèle de prise de décision comme un modèle de prise de décision à seuil absolu, le seul type de liaison consistant en la première liaison ou la deuxième liaison et le modèle de prise de décision à seuil absolu étant exprimé par l'équation qui suit :

$$Threshold_{abs} = Threshold_{abs0} - X^n$$

où $Threshold_{abs}$ représente un seuil absolu actuel, $Threshold_{abs\,0}$ représente un seuil absolu initial, X représente un paramètre d'atténuation et n représente un nombre total de transferts de liaison jusqu'à l'instant présent ; et
la sous-unité de prise de décision (3131) est configurée pour : en cas de détermination que le score de qualité de liaison de la liaison d'envoi actuelle est inférieur au seuil absolu actuel $Threshold_{abs}$, prendre une décision concernant l'utilisation d'une autre liaison comme liaison d'envoi suivante du premier équipement utilisateur, l'autre liaison consistant en la deuxième liaison ou la première liaison.

**11.** Dispositif de prise de décision (30) selon la revendication 9, dans lequel
la sous-unité de détermination (3131) est configurée pour : dans le cas où les informations de liaison historiques comprennent des informations concernant deux types de liaisons, déterminer le modèle de prise de décision comme un modèle de prise de décision à seuil relatif, lequel est exprimé par l'équation qui suit :

$$Threshold_{rel} = Threshold_{rel0} - X^n,$$

où $Threshold_{rel}$ représente un seuil relatif actuel, $Threshold_{rel0}$ représente un seuil relatif initial, X représente un paramètre d'atténuation et n représente un nombre total de transferts de liaison jusqu'à l'instant présent ; et
la sous-unité de prise de décision (3132) est configurée pour : en cas de détermination qu'une différence entre le score de qualité de liaison de la liaison d'envoi actuelle et un score de qualité d'une autre liaison est inférieur au seuil relatif actuel $Threshold_{rel}$, prendre une décision concernant l'utilisation de l'autre liaison comme liaison d'envoi suivante du premier équipement utilisateur ; si la liaison d'envoi actuelle consiste en la première liaison, l'autre liaison consistant en la deuxième liaison et, si la liaison d'envoi actuelle consiste en la deuxième liaison, l'autre liaison consistant en la première liaison.

**12.** Dispositif de prise de décision (30) selon l'une quelconque des revendications 7 à 11, dans lequel l'unité d'envoi (314) est configurée en outre pour envoyer une instruction de transfert de liaison au premier équipement utilisateur, l'instruction de transfert de liaison servant à donner pour instruction :

au premier équipement utilisateur d'effectuer un transfert de la première liaison à la deuxième liaison si la liaison d'envoi actuelle consiste en la première liaison et la liaison d'envoi suivante consiste en la deuxième liaison ; et
au premier équipement utilisateur d'effectuer un transfert de la deuxième liaison à la première liaison si la liaison d'envoi actuelle consiste en la deuxième liaison et la liaison d'envoi suivante consiste en la première liaison.

**13.** Système de prise de décision sur une liaison, comprenant : un premier équipement utilisateur et un deuxième équipement utilisateur se trouvant dans un état d'appel de type Voix sur Protocole Internet (VoIP), un serveur de transit et un dispositif de prise de décision, le premier équipement utilisateur étant connecté directement au deuxième équipement utilisateur par le biais d'une première liaison ne comprenant pas d'autre nœud que le premier équipement utilisateur et le deuxième équipement utilisateur, et le premier équipement utilisateur étant également connecté au deuxième équipement utilisateur par le biais d'une deuxième liaison comprenant le serveur de transit présent entre le premier équipement utilisateur et le deuxième équipement utilisateur, et
le dispositif de prise de décision consistant en le dispositif de prise de décision (30) selon l'une quelconque des revendications 7 à 12.

Second user
equipment

First user
equipment

*First link*

*Second link*

*Second link*

Transit server

Decision-making
device

**FIG. 1**

First user
equipment

Decision-
making device

101. Send audio service quality data to the
decision-making device

102. Determine, according to the audio service
quality data, a link quality score of a current
sending link of the first user equipment

103. Make, according to the link quality score of
the current sending link, a decision about using
the first link or the second link as a subsequent
sending link of the first user equipment

**FIG. 2**

First link information | First link information | First link information | First link information

**FIG. 3A**

Second link information | Second link information | Second link information | Second link information

**FIG. 3B**

First link information | Second link information | Second link information | First link information

**FIG. 4**

/ 20

First user equipment

/ 201

Service quality data collection module

/ 202

Transceiving module

/ 30

Decision-making device

/ 302
Data cleaning module

/ 303
Link quality assessment module

/ 304
Link handover decision-making module

/ 301
Transceiving module

/ 305
Request interval decision-making module

**FIG. 5**

30

| Decision-making device | | |
|---|---|---|
| 311 | 312 | 313 |
| Receiving unit | Determining unit | Decision-making unit |

**FIG. 6**

30

| Decision-making device | | 313 |
|---|---|---|
| | | Decision-making unit |
| 311 | 312 | Determining subunit — 3131 |
| Receiving unit | Determining unit | Decision-making subunit — 3132 |

**FIG. 7**

30

Decision-making device

311
Receiving unit

312
Determining unit

313
Decision-making unit

314
Sending unit

**FIG. 8**

30

Decision-making device

310
Processor

350
Memory

320

330
Transceiver

**FIG. 9**

**EP 3 445 000 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201610225404X
- US 20130235731 A

### Non-patent literature cited in the description

- **QUANG DUC BUI ; JENNINGS A.** Relay Path Selection Approaches in Peer-to-Peer VoIP Systems. *Telecommunication Networks and Applications Conference, 2008, PD,* 07 December 2008